(19) Europäisches Patentamt
European Patent Office
Office européen des brevets

(11) EP 4 671 323 A1

(12) EUROPEAN PATENT APPLICATION
published in accordance with Art. 153(4) EPC

(43) Date of publication:
**31.12.2025 Bulletin 2026/01**

(21) Application number: **24760326.9**

(22) Date of filing: **19.02.2024**

(51) International Patent Classification (IPC):
***C08L 67/00*** (2006.01) ***B32B 27/30*** (2006.01)
***C08J 3/20*** (2006.01) ***C08L 29/04*** (2006.01)
***C08L 101/06*** (2006.01)

(52) Cooperative Patent Classification (CPC):
**B32B 27/30; C08J 3/20; C08L 29/04; C08L 67/00; C08L 101/06;** Y02W 90/10

(86) International application number:
**PCT/JP2024/005882**

(87) International publication number:
**WO 2024/177028 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.02.2023 JP 2023024441**

(71) Applicant: **Mitsubishi Chemical Corporation**
**Tokyo 100-8251 (JP)**

(72) Inventors:
- **FUKAMACHI, Yuya**
  **Tokyo 100-8251 (JP)**
- **TANIGUCHI, Masahiko**
  **Tokyo 100-8251 (JP)**

(74) Representative: **Hoffmann Eitle**
**Patent- und Rechtsanwälte PartmbB**
**Arabellastraße 30**
**81925 München (DE)**

# (54) RESIN COMPOSITION AND METHOD FOR PRODUCING RESIN COMPOSITION

(57) The present invention provides a resin composition which contains a biodegradable polyester and a polyvinyl alcohol resin, and which exhibits excellent transparency. A resin composition according to the present invention contains (A) a polyester resin which contains at least one constituent unit derived from an aliphatic diol (provided that an ester group-containing acid-modified resin is excluded), (B) a polyvinyl alcohol resin, and (C) an ester group-containing acid modified resin.

EP 4 671 323 A1

## Description

### Technical Field

The present invention relates to a resin composition and a method for producing the resin composition.

### Background Art

The use of biodegradable polymers as materials with a low environmental load is anticipated, and such biodegradable polymers are beginning to be used in various molded products in place of materials such as polyolefins, polystyrene, aromatic polyesters, and vinyl chloride. In recent years, research on biodegradable materials has been actively conducted, and among this research, studies on aliphatic polyesters have been particularly active because when biodegraded, aliphatic polyesters are reduced to low molecular weight materials that are non-toxic and safe.

Examples of biodegradable polyesters include a polyester obtained by ring-opening polymerization of a cyclic lactone, a synthetic aliphatic polyester, a polyester biosynthesized in bacterial cells, and a polyester obtained by condensation of an aliphatic polyfunctional alcohol and an aliphatic polyfunctional carboxylic acid. Further examples include a polyglycolic acid or a polylactic acid obtained by direct or indirect polymerization of an oxycarboxylic acid.

A typical example of a polyester obtained by condensation of an aliphatic polyfunctional alcohol and an aliphatic polyfunctional carboxylic acid is an aliphatic polyester having, as main constituent units, a dicarboxylic acid component composed of succinic acid or adipic acid or both, and a diol component composed of ethylene glycol or butanediol or both.

Further examples of different polyesters include a polyester obtained by condensation of a compound such as suberic acid, sebacic acid, or dodecanedioic acid as an acid component, or an anhydride or derivative thereof, a polyester obtained by condensation of a compound such as hexanediol, octanediol, or cyclohexanedimethanol, and a derivative thereof with an alcohol component, and a polyester obtained by copolymerization of a very small amount of a carboxylic acid having three or more functional groups or hydroxycarboxylic acid for the purpose of providing branches in the polymer to improve the melt viscosity.

Efforts are being made to impart new functional properties to such a biodegradable polyester so that the biodegradable polyester can be applied to various industrial materials. For example, gas barrier properties are being imparted to a biodegradable polyester by mixing polyvinyl alcohol (hereinafter, also referred to as "PVA") with the biodegradable polyester. For example, Patent Document 1 proposes a biodegradable resin composition in which 80 vol.% or less of polyvinyl alcohol in a mica form is mixed with a biodegradable polyester.

### Citation List

#### Patent Document

Patent Document 1: JP H05-193077 A

### Summary of Invention

#### Technical Problem

The biodegradable polyester and the polyvinyl alcohol resin are mixed by a method such as melt extrusion or kneading to produce a resin composition in which the polyvinyl alcohol resin is dispersed in the matrix of the biodegradable polyester. However, the compatibility of the biodegradable polyester and the polyvinyl alcohol resin is low, and thus the polyvinyl alcohol resin is less likely to be finely dispersed, which results in a problem that the transparency of a molded product formed from the resin composition is impaired.

Accordingly, an object of the present invention is to provide a resin composition that contains a biodegradable polyester and a polyvinyl alcohol resin and exhibits excellent transparency.

#### Solution to Problem

The present invention relates to the following aspects 1 to 17.

Aspect 1 of the present invention is a resin composition containing (A) a polyester resin containing at least one constituent unit derived from an aliphatic diol (provided that an ester group-containing acid-modified resin is not included), (B) a polyvinyl alcohol resin, and (C) an ester group-containing acid-modified resin.

Aspect 2 of the present invention is the resin composition according to aspect 1, wherein the resin composition contains the component C in an amount of from 1 to 18 parts by mass per 100 parts by mass of a total of the component A,

the component B, and the component C.

Aspect 3 of the present invention is the resin composition according to aspect 1 or 2, wherein acid values of the component A, the component B, and the component C satisfy a relationship of Formula (i) described below:

$$\text{(acid value of component A - acid value of component B)/acid value of component C} \leq 0.6 \text{ (i).} \quad \text{(i).}$$

Aspect 4 of the present invention is the resin composition according to any one of aspects 1 to 3, wherein the acid value of the component A is 0.5 mg·KOH/g or more and less than 2.0 mg·KOH/g.

Aspect 5 of the present invention is the resin composition according to any one of aspects 1 to 4, wherein the acid value of the component B is 0.4 mg·KOH/g or less.

Aspect 6 of the present invention is the resin composition according to any one of aspects 1 to 5, wherein the acid value of the component C is 2.0 mg·KOH/g or more.

Aspect 7 of the present invention is the resin composition according to any one of aspects 1 to 6, wherein the resin composition contains the component A in an amount of from 57 to 98 parts by mass of per 100 parts by mass of the total of the component A, the component B, and the component C.

Aspect 8 of the present invention is the resin composition according to any one of aspects 1 to 7, wherein the resin composition contains the component B in an amount of from 1 to 25 parts by mass of per 100 parts by mass of a total of the component A, the component B, and the component C.

Aspect 9 of the present invention is the resin composition according to any one of aspects 1 to 8, wherein the component A is at least one biodegradable polyester selected from the group consisting of an aliphatic-aromatic copolyester resin, an aliphatic polyester resin, and an aromatic polyester resin.

Aspect 10 of the present invention is the resin composition according to any one of aspects 1 to 9, wherein the component B contains a modified polyvinyl alcohol.

Aspect 11 of the present invention is the resin composition according to any one of aspects 1 to 10, wherein the component C is an acid-modified product of at least one resin selected from the group consisting of an aliphatic-aromatic copolyester resin, an aliphatic polyester resin, and an aromatic polyester resin.

Aspect 12 of the present invention is a molded product containing the resin composition described in any one of aspects 1 to 11.

Aspect 13 of the present invention is a container containing the resin composition described in any one of aspects 1 to 11.

Aspect 14 of the present invention is a film containing the resin composition described in any one of aspects 1 to 11.

Aspect 15 of the present invention is a sheet containing the resin composition described in any one of aspects 1 to 11.

Aspect 16 of the present invention is a multilayer structure including at least one layer containing the resin composition described in any one of aspects 1 to 11.

Aspect 17 of the present invention is a method for producing a resin composition, the method including mixing (A) a polyester resin containing at least one constituent unit derived from an aliphatic diol (provided that an ester group-containing acid-modified resin is not included), (B) a polyvinyl alcohol resin, and (C) an ester group-containing acid-modified resin.

Advantageous Effects of Invention

The resin composition of the present invention is highly transparent, and therefore the transparency of a formed product formed from the resin composition of the present invention can be improved. Thus, the resin composition can be applied to various applications such as packaging materials and agricultural materials.

Description of Embodiments

Hereinafter, the configuration of the present invention will be described in detail, but the description illustrates merely examples of preferred embodiments.

In the present specification, the term "biodegradable" means satisfying the conditions defined in JIS K 6953-1:2011 (ISO 14855-1:2005).

In the present specification, the term "mass" is synonymous with "weight".

The resin composition of the present invention contains (A) a polyester resin (hereinafter, also referred to as a "component A") containing at least one constituent unit derived from an aliphatic diol, (B) a polyvinyl alcohol resin (hereinafter, also referred to as a "component B"), and (C) an ester group-containing acid-modified resin (hereinafter, also

referred to as a "component C").

The present inventors have conducted studies and have discovered that, surprisingly, the compatibility between a polyvinyl alcohol resin and a polyester resin containing at least one constituent unit derived from an aliphatic diol is enhanced by mixing an ester group-containing acid-modified resin with a resin composition containing the polyvinyl alcohol resin and the polyester resin containing at least one constituent unit derived from an aliphatic diol. When the compatibility between the respective components is increased, the polyvinyl alcohol resin can be finely dispersed in the matrix of the polyester resin containing at least one constituent unit derived from an aliphatic diol, and thereby the transparency of the resin composition can be increased.

(A) Polyester Resin Containing at Least One Constituent Unit Derived from Aliphatic Diol

The polyester resin containing at least one constituent unit derived from an aliphatic diol is a component that serves as a base resin of the resin composition.

Examples of the polyester resin containing at least one constituent unit derived from an aliphatic diol include biodegradable polyesters such as aliphatic-aromatic copolyester resins, aliphatic polyester resins, and aromatic polyester resins. Preferably, the polyester resin contains at least one selected from the group consisting of these biodegradable polyesters. From the viewpoint of excellent biodegradability, aliphatic-aromatic copolyester resins or aliphatic polyester resins are preferable.

The polyester resin containing at least one constituent unit derived from an aliphatic diol of the present invention does not include an ester group-containing acid-modified resin.

The aliphatic-aromatic copolyester resin is an aliphatic-aromatic copolyester resin containing an aliphatic diol unit, an aliphatic dicarboxylic acid unit, and an aromatic dicarboxylic acid unit as main constituent units, and is biodegradable. Specifically, for example, the main constituent units are an aliphatic diol unit represented by Formula (1) described below, an aliphatic dicarboxylic acid unit represented by Formula (2) described below, and an aromatic dicarboxylic acid unit represented by Formula (3) described below.

$$-O-R^1-O- \qquad (1)$$

In Formula (1), $R^1$ represents a divalent aliphatic hydrocarbon group.

$$-OC-R^2-CO- \qquad (2)$$

In Formula (2), $R^2$ represents a divalent aliphatic hydrocarbon group.

$$-OC-R^3-CO- \qquad (3)$$

In Formula (3), $R^3$ represents a divalent aromatic hydrocarbon group.

The aliphatic diol that provides the aliphatic diol unit of Formula (1) is not particularly limited, but from the viewpoint of achieving a balance between cost and mechanical strength, the aliphatic diol is preferably one having from 2 to 10 carbons. Examples of the aliphatic diol include ethylene glycol, 1,3-propanediol, 1,4-butanediol, and 1,4-cyclohexanedimethanol. Among these, aliphatic diols having from 2 to 4 carbons are preferable, ethylene glycol and 1,4-butanediol are more preferable, and 1,4-butanediol is particularly preferable. Two or more types of the above-described aliphatic diols may be used.

The aliphatic dicarboxylic acid component that provides the aliphatic dicarboxylic acid unit of Formula (2) is not particularly limited, but is preferably one having from 2 to 12 carbons from the viewpoint of achieving a balance between cost and biodegradability. Examples of the aliphatic dicarboxylic acid component include succinic acid, adipic acid, suberic acid, sebacic acid, azelaic acid, dodecanedioic acid, and derivatives thereof such as alkyl esters. Among these, succinic acid, sebacic acid or adipic acid, azelaic acid, and derivatives thereof such as alkyl esters are preferable. Two or more types of the above-described aliphatic dicarboxylic acid components may be used.

Examples of the aromatic dicarboxylic acid component that provides the aromatic dicarboxylic acid unit of Formula (3) include terephthalic acid, isophthalic acid, naphthalenedicarboxylic acid, furandicarboxylic acid, and derivatives thereof such as alkyl esters. Among these, from the viewpoint of biodegradability, $R^3$ is preferably a phenylene group. Specifically, the aromatic dicarboxylic acid component that provides the aromatic dicarboxylic acid unit of Formula (3) is preferably terephthalic acid, isophthalic acid, or a derivative thereof such as an alkyl ester, and particularly preferably terephthalic acid or a derivative thereof such as an alkyl ester. The aromatic dicarboxylic acid component may be an aromatic dicarboxylic acid in which a part of the aromatic ring is substituted with a sulfonate salt. Two or more types of the above-described aromatic dicarboxylic acid components may be used.

From the viewpoints of the melting point and biodegradability, the content of the aromatic dicarboxylic acid unit in

the aliphatic-aromatic copolyester resin is preferably 5 mol% or more and 95 mol% or less, and is specifically preferably 5 mol% or more, more preferably 35 mol% or more, and particularly preferably 40 mol% or more, and is preferably 95 mol% or less, more preferably 65 mol% or less, and particularly preferably 60 mol% or less, per 100 mol% of the total of all dicarboxylic acid units, i.e., the total of the aliphatic dicarboxylic acid unit and the aromatic dicarboxylic acid unit.

In a case in which two or more types of aromatic dicarboxylic acids are used, in the aliphatic-aromatic copolyester resin, the proportion of the terephthalic acid unit among all of the aromatic dicarboxylic acid units is preferably 40 mol% or more and 60 mol% or less. When this proportion is less than 40 mol%, the heat resistance is insufficient, whereas when this proportion exceeds 60 mol%, biodegradability tends to worsen. From this viewpoint, the proportion of the terephthalic acid unit among all of the aromatic dicarboxylic acid units in the aliphatic-aromatic copolyester resin is more preferably 42 mol% or more and 58 mol% or less, and is still more preferably 45 mol% or more and 55 mol% or less.

The aliphatic-aromatic copolyester resin may have a repeating unit (aliphatic oxycarboxylic acid unit) derived from an aliphatic oxycarboxylic acid. Specific examples of the aliphatic oxycarboxylic acid component that provides the aliphatic oxycarboxylic acid unit include lactic acid, glycolic acid, 2-hydroxy-n-butyric acid, 2-hydroxycaproic acid, 6-hydroxycaproic acid, 2-hydroxy-3,3-dimethylbutyric acid, 2-hydroxy-3-methylbutyric acid, 2-hydroxyisocaproic acid, and a mixture thereof. Furthermore, derivatives thereof such as lower alkyl esters or intramolecular esters may be used. When optical isomers of these compounds exist, the compounds may be in the form of a D-isomer, an L-isomer, or a racemic mixture thereof, and may be in the form of a solid, a liquid, or an aqueous solution. Among these, lactic acid, glycolic acid, or derivatives thereof are preferable. A single type of these aliphatic oxycarboxylic acid components may be used alone, or a mixture of two or more types thereof may be used.

When the aliphatic-aromatic copolyester resin contains such an aliphatic oxycarboxylic acid unit, the content thereof is preferably 20 mol% or less, and more preferably 10 mol% or less, per 100 mol% of all the constituent units constituting the aliphatic-aromatic copolyester resin.

Preferable examples of the aliphatic-aromatic copolyester resin include polybutylene terephthalate-based resins such as polybutylene adipate terephthalate (PBAT), polybutylene succinate terephthalate (PBST), polybutylene sebacate terephthalate (PBSeT), polybutylene azelate terephthalate (PBAzT), and polybutylene brassylate terephthalate (PBBrT), and polyfurandicarboxylate-based resins such as polybutylene adipate furanoate (PBAF), polybutylene succinate furanoate (PBSF), polybutylene sebacate furanoate (PBSeF), and polybutylene succinate sebacate furanoate (PBSSeF).

The aliphatic polyester resin is an aliphatic polyester resin containing an aliphatic diol unit and an aliphatic dicarboxylic acid unit as main constituent units. The aliphatic polyester resin does not include an aromatic dicarboxylic acid unit, and thus is differentiated from the aliphatic-aromatic copolyester resin described above.

More specifically, the aliphatic polyester resin is a polyester resin containing an aliphatic diol unit represented by Formula (4) described below and an aliphatic dicarboxylic acid unit represented by Formula (5) described below.

$$-O-R^4-O- \qquad (4)$$

In Formula (4), $R^4$ represents a divalent aliphatic hydrocarbon group.

$$-OC-R^5-CO- \qquad (5)$$

In Formula (5), $R^5$ represents a divalent aliphatic hydrocarbon group.

The aliphatic diol unit represented by Formula (4) or the aliphatic dicarboxylic acid unit represented by Formula (5) may be derived from a compound derived from petroleum or from a compound derived from a plant-based raw material, but is preferably derived from a compound derived from a plant-based raw material.

When the aliphatic polyester resin is a copolymer, the aliphatic polyester resin may contain two or more types of aliphatic diol units represented by Formula (4), and the aliphatic polyester resin may contain two or more types of aliphatic dicarboxylic acid units represented by Formula (5).

The aliphatic diol that provides the diol unit represented by Formula (4) is not particularly limited, but from the viewpoint of moldability and mechanical strength, an aliphatic diol having from 2 to 10 carbons is preferable, and an aliphatic diol having from 4 to 6 carbons is particularly preferable. Examples thereof include ethylene glycol, 1,3-propanediol, 1,4-butanediol, and 1,4-cyclohexanedimethanol. Among these, 1,4-butanediol is particularly preferable. Two or more types of the above-described aliphatic diols may be used.

The aliphatic dicarboxylic acid component that provides the aliphatic dicarboxylic acid unit represented by Formula (5) is not particularly limited, but is preferably an aliphatic dicarboxylic acid having from 2 to 40 carbons or a derivative thereof such as an alkyl ester, and is particularly preferably an aliphatic dicarboxylic acid having from 4 to 10 carbons or a derivative thereof such as an alkyl ester. Examples of the aliphatic dicarboxylic acid and derivatives thereof such as alkyl esters include succinic acid, adipic acid, suberic acid, sebacic acid, dodecanedioic acid, dimer acid, and derivatives thereof such as alkyl esters. Among these, succinic acid, adipic acid, and sebacic acid are preferable, and

succinic acid and adipic acid are particularly preferable. Two or more types of the above-described aliphatic dicarboxylic acid components may be used.

The aliphatic polyester resin may have an aliphatic oxycarboxylic acid unit. Specific examples of the aliphatic oxycarboxylic acid component that provides the aliphatic oxycarboxylic acid unit include lactic acid, glycolic acid, 2-hydroxy-n-butyric acid, 2-hydroxycaproic acid, 6-hydroxycaproic acid, 2-hydroxy-3,3-dimethylbutyric acid, 2-hydroxy-3-methylbutyric acid, 2-hydroxyisocaproic acid, and derivatives thereof such as lower alkyl esters or intramolecular esters. When optical isomers of these compounds exist, the compounds may be in the form of a D-isomer, an L-isomer, or a racemic mixture thereof, and may be in the form of a solid, a liquid, or an aqueous solution. Among these, lactic acid, glycolic acid, or a derivative thereof is particularly preferable. A single type of these aliphatic oxycarboxylic acids may be used alone, or a mixture of two or more types thereof may be used.

When the aliphatic polyester resin contains such an aliphatic oxycarboxylic acid unit, from the viewpoint of moldability, the content thereof is preferably 20 mol% or less, more preferably 10 mol% or less, still more preferably 5 mol% or less, and most preferably 3 mol% or less, per 100 mol% of all constituent units constituting the aliphatic polyester resin.

The aliphatic polyester resin is preferably a polybutylene succinate-based resin such as polybutylene succinate (PBS), polybutylene succinate adipate (PBSA), polybutylene succinate sebacate (PBSSe), polybutylene succinate azelate (PBSAz), or polybutylene brassylate terephthalate (PBSBr) because of high biodegradability.

The aromatic polyester resin is a resin in which the repeating unit of the aliphatic polyester resin described above is replaced with an aromatic compound unit.

The aromatic polyester resin is preferably polybutylene succinate adipate terephthalate (PBSAT), polycaprolactone (PCL), or the like.

The polyester resin containing at least one constituent unit derived from an aliphatic diol may be obtained by synthesis, or may be a commercially available product. In the case of synthesis, a known method for producing a polyester can be adopted.

Examples of commercially available products of the polyester resin containing at least one constituent unit derived from an aliphatic diol include "Ecoflex" available from BASF and containing, as a main component, polybutylene adipate terephthalate, i.e., a polycondensate of adipic acid/terephthalic acid/1,4-butanediol, and "Bio-PBS" series available from Mitsubishi Chemical Corporation and containing, as a main component, polybutylene succinate, i.e., a polycondensate of succinic acid/1,4-butanediol.

In the present invention, the polyester resin containing at least one constituent unit derived from an aliphatic diol is not limited to a single type, and two or more types of polyesters differing in the types of constituent units, the proportions of the constituent units, the production method, the physical properties, and the like may be blended and used.

The acid value of the polyester resin containing at least one constituent unit derived from an aliphatic diol is preferably 0.5 mg·KOH/g or more and less than 2.0 mg·KOH/g. When the acid value is too high, the resin composition may exhibit a poor appearance, whereas when the acid value is too low, the production cost of the polyester resin containing at least one constituent unit derived from an aliphatic diol may increase.

The acid value of the polyester resin containing at least one constituent unit derived from an aliphatic diol is more preferably 0.55 mg·KOH/g or more, and even more preferably 0.6 mg·KOH/g or more, and is more preferably 1.8 mg·KOH/g or less, and even more preferably 1.5 mg·KOH/g or less.

The acid value is determined by the following operation.

100 ml of a solvent is weighed and placed into a test bottle, and 5 g of a sample is added thereto while stirring with a hot stirrer (temperature setting of 75°C, stirrer rotational speed of 750 rpm). Here, an appropriate solvent that can dissolve the sample and is miscible with pure water is selected. For example, tetrahydrofuran is selected in a case of polybutylene adipate terephthalate, a mixed solvent of chloroform and ethanol is selected in a case of polybutylene succinate, and water is selected in a case of polyvinyl alcohol. Stirring is continued until the sample is dissolved.

After dissolution, 4 ml of ultrapure water is added and the mixture is further stirred for 10 minutes to prepare a test liquid. The test liquid is titrated with an aqueous potassium hydroxide solution (N/10) using an automatic titrator, and the acid value is determined by the following equation.

In the blank test, the acid value is determined in the same manner with the exception that no sample is added. The blank test is carried out for each solvent.

Equation

$$\text{Acid value AV (mg·KOH/g)} = \{(A - B) \times f \times 5.61\}/S$$

A = used amount (ml) of N/10 aqueous potassium hydroxide solution required for the sample
B = used amount (ml) of N/10 aqueous potassium hydroxide solution required for the blank test
f = titer of N/10 aqueous potassium hydroxide solution
S = amount (g) of sample collected

As the titrator, for example, the following can be used.

Titration measuring device: Automatic Potentiometric Titrator AT-610 available from Kyoto Electronics Manufacturing Co., Ltd.
Reference electrode: composite glass electrode C-171
Titrant: aqueous potassium hydroxide solution (N/10) available from FUJIFILM Wako Pure Chemical Corporation

In a case in which two or more types of polyesters are included, the acid value of the polyester resin containing at least one constituent unit derived from an aliphatic diol is calculated according to the mass proportions of the polyesters.
The weight average molecular weight of the polyester resin containing at least one constituent unit derived from an aliphatic diol is preferably from 50000 to 400000, more preferably from 70000 to 200000, and particularly preferably from 90000 to 180000. When the weight average molecular weight is too large, the melt viscosity tends to increase, making melt-molding difficult, whereas when the weight average molecular weight is too small, the molded product tends to become brittle.
When measured at 210°C with an amount of 2.16 kg, the melt flow rate (MFR) of the polyester resin containing at least one constituent unit derived from an aliphatic diol is preferably from 0.5 to 20 g/10 minutes, more preferably from 1.5 to 10 g/10 minutes, and particularly preferably from 2.0 to 8.0 g/10 minutes. The MFR of the biodegradable polyester can be adjusted by the molecular weight.
The melting point of the polyester resin containing at least one constituent unit derived from an aliphatic diol is preferably from 60 to 260°C, more preferably from 70 to 200°C, and still more preferably from 75 to 140°C.
In the present invention, the content of the component A (polyester resin containing at least one constituent unit derived from an aliphatic diol) is preferably from 57 to 98 parts by mass per 100 parts by mass of the total content of the component A, the component B (polyvinyl alcohol resin), and the component C (ester group-containing acid-modified resin). When the content of the component A is 57 parts by mass or more, the mechanical strength of the resin composition can be improved, whereas when the content of the component A is 98 parts by mass or less, both transparency and impartment of functionality by the polyvinyl alcohol (PVA) can be achieved. The content of the component A is more preferably 62 parts by mass or more, even more preferably 71 parts by mass or more, and particularly preferably 80 parts by mass or more, and is more preferably 97 parts by mass or less, and even more preferably 96 parts by mass or less.

(B) Polyvinyl Alcohol (PVA) Resin

The PVA resin used in the present invention is a resin mainly composed of a vinyl alcohol constituent unit and produced by saponifying a polyvinyl ester-based resin obtained by polymerizing a vinyl ester-based monomer, and the PVA resin is composed of a vinyl alcohol constituent unit and a vinyl ester constituent unit corresponding to the degree of saponification.
Examples of the vinyl ester-based monomer include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, and vinyl versatate, and vinyl acetate is economically preferable.
As the PVA resin, a resin obtained by copolymerizing various monomers when producing a polyvinyl ester-based resin and then saponifying the copolymer, or various modified PVAs obtained by introducing, by post-modification, various functional groups into an unmodified PVA can be used. Among these, it is preferable to contain a modified PVA from the viewpoint of functionality.
Examples of the monomer used for copolymerization with the vinyl ester-based monomer include olefins such as ethylene, propylene, isobutylene, $\alpha$-octene, $\alpha$-dodecene, and $\alpha$-octadecene; hydroxy group-containing $\alpha$-olefins such as 3-buten-1-ol, 4-penten-1-ol, 5-hexen-1-ol, and 3,4-dihydroxy-1-butene, and derivatives thereof such as acylated products; unsaturated acids such as acrylic acid, methacrylic acid, crotonic acid, maleic acid, maleic anhydride, and itaconic acid, salts thereof, and monoesters or dialkyl esters thereof; nitriles such as acrylonitrile and methacrylonitrile; amides such as diacetone acrylamide, acrylamide, and methacrylamide; olefin sulfonic acids such as ethylene sulfonic acid, allyl sulfonic acid, and methallyl sulfonic acid, or salts thereof; vinyl compounds such as alkyl vinyl ethers, dimethylallyl vinyl ketone, N-vinylpyrrolidone, vinyl chloride, vinyl ethylene carbonate, 2,2-dialkyl-4-vinyl-1,3-dioxolane, glycerin monoallyl ether, and 3,4-diacetoxy-1-butene; substituted vinyl acetates such as isopropenyl acetate and 1-methoxyvinyl acetate; vinylidene chloride, 1,4-diacetoxy-2-butene, and vinylene carbonate.
Moreover, examples of the modified PVA to which a functional group is introduced by post-modification include a modified PVA having an acetoacetyl group and obtained by reaction with diketene, a modified PVA having a polyalkylene oxide group and obtained by reaction with ethylene oxide, a modified PVA having a hydroxyalkyl group and obtained by reaction with an epoxy compound or the like, and a modified PVA obtained by reacting, with PVA, an aldehyde compound having various functional groups.
The content of the modified species in the modified PVA, i.e., the content of the constituent units derived from

various monomers in the copolymer or the content of the functional groups introduced by the post-reaction cannot be generalized because the characteristics vary greatly depending on the modified species, but the content thereof is preferably in a range of from 1 to 20 mol%, and particularly preferably in a range of from 2 to 10 mol%.

Among these various modified PVAs, in the present invention, a PVA having a constituent unit having a 1,2-diol structure in a side chain represented by General Formula (6) described below (hereinafter, may be referred to as a "1,2-diol structural unit") is preferably used from the viewpoints of transparency and ease of melt molding.

[Chem. 1]

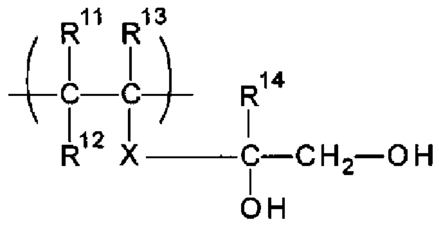

... (6)

In the 1,2-diol structural unit represented by General Formula (6), $R^{11}$ to $R^{14}$ each independently represent a hydrogen atom or a linear or branched alkyl group having from 1 to 4 carbons.

Examples of the alkyl group include a methyl group, an ethyl group, an n-propyl group, an isopropyl group, an n-butyl group, an isobutyl group, and a tert-butyl group. As necessary, the alkyl group may have a functional group such as a halogen group, a hydroxyl group, an ester group, a carboxylic acid group, or a sulfonic acid group.

X in the 1,2-diol structural unit represented by General Formula (6) represents a single bond or a bonding chain.

Examples of the bonding chain include hydrocarbons such as a linear or branched alkylene group having from 1 to 6 carbons, a linear or branched alkenylene group having from 1 to 6 carbons, a linear or branched alkynylene group having from 1 to 6 carbons, a phenylene group, and a naphthylene group (these hydrocarbons may be substituted with a halogen atom such as a fluorine atom, a chlorine atom, or a bromine atom, or the like). Other examples of the bonding chain include -O-, - $(CH_2O)_t$-, -$(OCH_2)_t$-, -$(CH_2O)_tCH_2$-, -CO-, -COCO-, -CO$(CH_2)_t$CO-, -CO$(C_6H_4)$CO-, -S-, -CS-, -SO-, -$SO_2$-, -NR-, -CONR-, -NRCO-, -CSNR-, -NRCS-, -NRNR-, -$HPO_4$-, -Si$(OR)_2$-, -OSi$(OR)_2$-, -OSi$(OR)_2$O-, -Ti$(OR)_2$-, -OTi$(OR)_2$-, -OTi$(OR)_2$O-, - Al(OR)-, -OAl(OR)-, and -OAl(OR)O- (each R is independently an optional substituent and represents a hydrogen atom or a linear or branched alkyl group having from 1 to 6 carbons, and t represents an integer from 1 to 5).

Among these, from the viewpoint of stability during production or use, the bonding chain is preferably a linear or branched alkylene group having from 1 to 6 carbons, and particularly preferably a methylene group or -$CH_2OCH_2$-.

X is most preferably a single bond from the viewpoint of thermal stability and stability under high temperature or acidic conditions.

Among the 1,2-diol structural units represented by General Formula (6), a structural unit represented by General Formula (6') described below in which $R^{11}$ to $R^{14}$ are all hydrogen atoms and X is a single bond is most preferable.

[Chem. 2]

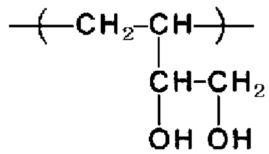

... (6')

Examples of the method for producing the PVA having a 1,2-diol structural unit in a side chain include the method described in paragraphs [0026] to [0034] of JP 2015-143356 A.

The content of the 1,2-diol structural unit contained in the PVA having the 1,2-diol structural unit in a side chain is preferably from 1 to 20 mol%, more preferably from 2 to 10 mol%, and particularly preferably from 3 to 8 mol%. When the content is too low, the effect of the 1,2-diol structure in the side chain is not easily obtained, whereas when the content is too high, the gas barrier property at high humidity tends to decrease significantly.

The content of the 1,2-diol structural unit in the PVA having the 1,2-diol structural unit in a side chain can be determined from the $^1H$-NMR spectrum of the completely saponified PVA (solvent: DMSO-$d_6$, internal standard: tetramethylsilane). Specifically, the content can be calculated from the peak area derived from hydroxyl group protons, methine protons, and methylene protons in the 1,2-diol structural units, the methylene protons in the main chain, the

protons of the hydroxyl groups linked to the main chain, and the like.

The average degree of polymerization (measured in accordance with JIS K6726) of the PVA resin used in the present invention is preferably from 200 to 1800. When the average degree of polymerization of the PVA resin is within the above range, the appearance of the resin composition can be improved. The average degree of polymerization of the PVA resin is preferably from 300 to 1500, and more preferably from 300 to 1000.

The degree of saponification (average degree of saponification measured in accordance with JIS K6726) of the PVA resin used in the present invention is preferably from 80 to 100 mol%, particularly preferably from 90 to 99.9 mol%, and especially preferably from 98 to 99.9 mol%. When the degree of saponification is too low, the gas barrier property of the resin composition tends to decrease, and therefore, the degree of saponification is preferably 80 mol% or more.

The acid value of the PVA resin is not particularly limited as long as the acid value is smaller than the acid value of the component A (the polyester resin containing at least one constituent unit derived from an aliphatic diol) serving as the base resin, but from the viewpoint of thermal stability, the acid value of the PVA resin is preferably 0.4 mg·KOH/g or less. When the acid value of the PVA resin is 0.4 mg·KOH/g or less, thermal degradation during melt-kneading can be suppressed.

The acid value of the PVA resin is preferably 0.01 mg·KOH/g or more, more preferably 0.05 mg·KOH/g or more, and even more preferably 0.1 mg·KOH/g or more, and is more preferably 0.3 mg·KOH/g or less, and even more preferably 0.2 mg·KOH/g or less. That is, the acid value of the PVA resin is preferably in a range from 0.01 to 0.4 mg·KOH/g.

When two or more PVA resins are contained, the acid value of the PVA resin is calculated according to the mass proportion of each PVA resin.

The PVA resin used in the present invention may be a single type or a mixture of two or more types. When the PVA resin is a mixture of two or more types, combinations such as a combination of the above-mentioned unmodified PVAs, a combination of an unmodified PVA and a PVA resin having a constituent unit represented by General Formula (6), a combination of PVA resins having constituent units represented by General Formula (6) and differing in terms of the degree of saponification, the degree of polymerization, the degree of modification, and the like, and a combination of an unmodified PVA or a PVA resin having a constituent unit represented by General Formula (6) and another modified PVA resin can be used.

In the present invention, the content of the component B (PVA resin) is preferably from 1 to 25 parts by mass per 100 parts by mass of the total content of the component A (polyester resin containing at least one constituent unit derived from an aliphatic diol), the component B, and the component C (ester group-containing acid-modified resin). When the content of the component B is 1 part by mass or more, a gas barrier function can be imparted to the resin composition, whereas when the content thereof is 25 parts by mass or less, moldability can be improved. The content of the component B is more preferably 1.5 parts by mass or more, and even more preferably 2 parts by mass or more, and is more preferably 20 parts by mass or less, even more preferably 15 parts by mass or less, and particularly preferably 10 parts by mass or less.

(C) Ester Group-Containing Acid-Modified Resin

The resin composition of the present invention contains an ester group-containing acid-modified resin in addition to the component A, i.e., the polyester resin containing at least one constituent unit derived from an aliphatic diol and the component B, i.e., the PVA resin.

Examples of the ester group-containing acid-modified resin include acid-modified biodegradable polyesters and acid-modified polyester-based elastomers.

Examples of the acid-modified biodegradable polyester include acid-modified products of at least one resin selected from the group consisting of aliphatic-aromatic copolyester resins, aliphatic polyester resins, and aromatic polyester resins, and preferred examples thereof are also the same. However, an acid-modified aliphatic-aromatic copolyester resin is more preferable, and a biodegradable polyester having a high acid value that is higher than that of the biodegradable polyester, i.e., the component A used as the base resin is preferably used.

The acid value of the ester group-containing acid-modified resin is not particularly limited, but the acid values of the component A (polyester resin containing at least one constituent unit derived from an aliphatic diol), the component B (PVA resin), and the component C (ester group-containing acid-modified resin) preferably satisfy the relationship of Formula (i) described below.

$$\text{(Acid value of component A - acid value of component B)/acid value of component C} \leq 0.6 \text{ (i)} \qquad \text{(i)}$$

When the acid values of the component A, the component B, and the component C satisfy Formula (i), the compatibility of the respective components is enhanced, the PVA resin can be finely dispersed in the matrix of the component A, and the transparency of the resin composition is improved.

The value obtained from (acid value of component A - acid value of component B)/acid value of component C is preferably 0.55 or less, and the lower limit is preferably 0.1 or more, and more preferably 0.2 or more. Specifically, the relationship between the acid values of the component A, the component B, and the component C preferably satisfies Formula (ii) described below, and more preferably satisfies Formula (iii) described below.

$$0.1 \leq \text{(acid value of component A - acid value of component B)/acid value of component C} \leq 0.6 \text{ (ii)} \quad \text{(ii)}$$

$$0.2 \leq \text{(acid value of component A - acid value of component B)/acid value of component C} \leq 0.55 \text{ (iii)} \quad \text{(iii)}$$

The ester group-containing acid-modified resin satisfying Formula (i) described above preferably has an acid value of 2.0 mg·KOH/g or more, more preferably 2.5 mg·KOH/g or more, and even more preferably 3.0 mg·KOH/g or more, and preferably 10 mg·KOH/g or less, more preferably 8.0 mg·KOH/g or less, and even more preferably 5.0 mg·KOH/g or less. That is, the acid value of the ester group-containing acid-modified resin is preferably in a range from 2.0 to 10 mg·KOH/g.

In the present invention, the content of the component C (ester group-containing acid-modified resin) is preferably from 1 to 18 parts by mass per 100 parts by mass of the total content of the component A (polyester resin containing at least one constituent unit derived from an aliphatic diol), the component B (PVA resin), and the component C. When the content of the component C is 1 part by mass or more, the effect of the present invention is obtained. However, when the content of the component C is too large, the effect of the present invention is not easily obtained. The content of the component C is more preferably 1.5 parts by mass or more, and even more preferably 2 parts by mass or more, and is more preferably 14 parts by mass or less, and even more preferably 10 parts by mass or less.

The resin composition of the present invention may contain an additional component as long as the effects of the present invention are not impaired. Examples of the additional component include a reinforcing agent, a filler, a plasticizer, a pigment, a dye, a lubricant, an antioxidant, an antistatic agent, an ultraviolet absorber, a heat stabilizer, a light stabilizer, a surfactant, an antibacterial agent, an antistatic agent, a drying agent, an anti-blocking agent, a flame retardant, a crosslinking agent, a curing agent, a foaming agent, and a crystal nucleating agent.

The resin composition of the present invention is usually formed into a molded product such as pellets or a powder for use as a molding material. From the viewpoints of excellent handling properties when transporting or inserting the resin composition into a molding machine and minimal problems with the generation of a fine powder, among these forms, the resin composition is preferably formed into a pellet shape.

Forming into a pellet shape can be carried out by a known method, and a method of extruding the resin composition from an extruder into a strand shape, cooling the strand, and then cutting the strand into a predetermined length to form cylindrical pellets is efficient.

The size of the cylindrical pellets includes a length (length in the longitudinal direction) of usually from 1 to 4 mm and preferably from 2 to 3 mm, and a diameter of usually from 1 to 4 mm and preferably from 2 to 3 mm.

The resin composition of the present invention is produced by mixing a polyester resin containing at least one constituent unit derived from an aliphatic diol (component A), a PVA resin (component B), and an ester group-containing acid-modified resin (component C). An example of the production method of the present invention is a method of melt-kneading the component A, the component B, and the component C, and a method of dry-blending the component A, the component B, and the component C, and then melting and kneading the components is preferable.

Examples of the method of melt-kneading include a method in which the component A, the component B, the component C, and an optional component are mixed with a mixer such as a Henschel mixer or a ribbon blender, and then the mixture is melted and kneaded with a melt-kneader such as a single-screw or twin-screw extruder, a roll, a Banbury mixer, a kneader, or a Brabender mixer.

The temperature during melt-kneading can be appropriately set in a temperature range that is equal to or higher than the melting points of the component A, the component B, and the component C and does not cause thermal degradation, but is preferably in a range from 100 to 250°C. The temperature during melt-kneading is more preferably 120°C or higher, and even more preferably 140°C or higher, and is more preferably 230°C or lower, and even more preferably 210°C or lower. Since the component A is easily thermally decomposed, the temperature during melt-kneading is preferably 210°C or lower.

The resin composition used in the present invention excels in fluidity and is easy to handle, and thus is useful as a molding material. As the melt molding method, a known molding method can be used, such as extrusion molding, inflation molding, injection molding, blow molding, vacuum molding, pressure molding, compression molding, or calender molding.

Various molded products can be formed using the resin composition of the present invention. Examples of the molded product obtained using the resin composition of the present invention include products having various shapes, such as a film, a sheet, a container, a pipe, a disk, a ring, a bag-like product, a bottle-like product, and a fibrous product.

A laminate in which a layer containing the resin composition of the present invention and an additional functional

layer are laminated, i.e., a multilayer structure including at least one layer containing the resin composition of the present invention can be suitably used for various packaging materials and the like.

## Examples

Hereinafter, the present invention will be described by way of Examples, but as long as the gist of the present invention is not exceeded, the present invention is not limited to the description of the following Examples.
In the Examples, the term "parts" means "parts by mass" unless otherwise specified.
The base resin and the PVA-based resin used in the Examples are as follows.

### Base Resin

Polyester Resin Containing at Least One Constituent Unit Derived from Aliphatic Diol (Component A)

(a-1) Polybutylene succinate adipate (PBSA): "BioPBS FD92PM" available from Mitsubishi Chemical Corporation (acid value: 1.3 mg·KOH/g)
(a-2) Polybutylene succinate (PBS): "BioPBS FZ91PM" available from Mitsubishi Chemical Corporation (acid value: 1.1 mg·KOH/g)
(a-3) Polybutylene adipate terephthalate (PBAT): "Ecoflex f blend C1200" available from BASF (acid value: 0.6 mg·KOH/g)

Polyester Resin Not Containing Constituent Unit Derived from Aliphatic Diol

(a-4) Polylactic acid (PLA): "Ingeo" available from NatureWorks LLC (acid value: 0 mg·KOH/g)

### PVA Resin (Component B)

(b-1) 1,2-Diol-modified polyvinyl alcohol ("Nichigo G-Polymer" available from Mitsubishi Chemical Corporation, estimated polymerization degree: 450, degree of saponification: 99 mol%, modification degree: 6 mol%, acid value: 0.2 mg·KOH/g)

### Ester Group-Containing Acid-Modified Resin (Component C)

The ester group-containing acid-modified resin used in each Example was prepared as follows.

Production Example 1: Preparation of Ester Group-Containing Acid-Modified Resins c-1 to c-3

Maleic anhydride and 2,5-dimethyl-2,5-di(t-butyloxy)hexane ("TRIGONOX 101-50D-PD" available from Nouryon Functional Chemicals B.V) as a radical initiator were mixed with 100 parts of polybutylene adipate terephthalate (PBAT, "Ecoflex F blend C1200" available from BASF) at the blending ratio described in Table 1, and the mixture was melt-kneaded and granulated using a twin-screw extruder. The twin-screw extruder that was used and the operating conditions thereof were as follows.

Twin-Screw Extruder

Device: "TEM18DS" available from Shibaura Machine Co., Ltd.
Discharge amount: 5 kg/h
Screw rotational speed: 200 rpm
Temperature setting: C1/C2/C3/C4/C5/C6/H = 30°C/160°C/160°C/160°C/160°C/160°C/160°C
Vacuum vent: C5 (vacuum pressure -0.07 MPa)
Screen mesh: 60/90/60
Die: 3 holes

[Table 1]

Table 1

| Component C | Blending proportions (parts by mass) | | | Acid value [mg·KOH/g] of granulated product |
|---|---|---|---|---|
| | PBAT | Maleic anhydride | Radical initiator | |
| c-1 | 100 | 0.15 | 0.213 | 2.1 |
| c-2 | 100 | 0.25 | 0.355 | 3.0 |
| c-3 | 100 | 0.35 | 0.497 | 4.6 |

The acid value of each of the above components was measured as follows.

100 ml of a solvent shown in Table 2 below was weighed and added into a test bottle, and 5 g of a sample was added thereto while stirring with a hot stirrer (temperature setting of 75°C, stirrer rotational speed of 750 rpm). The sample was stirred for 5 to 6 hours until dissolved.

After the sample was dissolved, 4 ml of ultrapure water was added, and the mixture was further stirred for 10 minutes to prepare a test liquid. The test liquid was titrated with an aqueous potassium hydroxide solution (N/10) using an automatic titrator, and the acid value was determined by the following equation. In the blank test, the acid value was determined in the same manner with the exception that a sample was not added.

$$\text{Acid value AV (mg·KOH/g)} = \{(A - B) \times f \times 5.61\}/S$$

A = used amount (ml) of N/10 aqueous potassium hydroxide solution required for the sample
B = used amount (ml) of N/10 aqueous potassium hydroxide solution required for the blank test
f = titer of N/10 aqueous potassium hydroxide solution
S = amount (g) of sample collected

The following titrator was used.

Titration measuring device: Automatic Potentiometric Titrator AT-610 available from Kyoto Electronics Manufacturing Co., Ltd.
Reference electrode: composite glass electrode C-171
Titrant: aqueous potassium hydroxide solution (N/10) available from FUJIFILM Wako Pure Chemical Corporation

[Table 2]

Table 2

| Component No. | Solvent |
|---|---|
| a-1 to a-4 | Chloroform/ethanol = 3/2 (mass ratio) |
| b-1 | Water |
| c-1 to c-3 | Tetrahydrofuran |

Test Example 1

Example 1

An antioxidant ("Irganox 1010" available from BASF Japan Ltd.) was added in an amount of 500 ppm to 80 parts of polybutylene succinate adipate (PBSA), after which 10 parts of 1,2-diol-modified polyvinyl alcohol and 10 parts of pellets of the ester group-containing acid-modified resin c-3 prepared above were added thereto and mixed, the mixture was melt-kneaded with a twin-screw extruder, extruded into a strand shape, cooled with water, and then cut with a pelletizer to

produce a cylindrical resin composition. The twin-screw extruder that was used and the operating conditions thereof were as follows.

Twin-Screw Extruder

Device: "TEX30α" available from The Japan Steel Works, Ltd.
Discharge amount: 15 kg/h
Screw rotational speed: 200 rpm
Temperature setting:
C1/C2/C3/C4/C5/C6/C7/C8/C9/C10/C11/C12/C13/C14/C15/C16/DH = 50°C/150°C/150°C/150°C/170°C/170°C/170°C/170°C/170°C/170°C/170°C/170°C/1 70°C/170°C/170°C/170°C
Vacuum vent: C15 (vacuum pressure -0.07 MPa)
Screen mesh: 90/90
Die: 4 holes

Examples 2 to 6 and Comparative Example 1

A resin composition was produced in the same manner as in Example 1 with the exception that the type and blending amount of the ester group-containing acid-modified resin were changed as shown in Table 3.
The content of polybutylene succinate adipate (PBSA) was adjusted according to the content of the ester group-containing acid-modified resin such that the total content of all the components was 100 parts.

Comparative Example 2

A resin composition was produced in the same manner as in Example 1 with the exception that polylactic acid (PLA) was used instead of the polybutylene succinate adipate (PBSA).

Test Example 2

Example 7

A resin composition was produced in the same manner as in Example 1 with the exception that polybutylene succinate (PBS) was used instead of the polybutylene succinate adipate (PBSA).

Comparative Example 3

A resin composition was produced in the same manner as in Example 7 with the exception that the amount of the polybutylene succinate (PBS) was changed to 90 parts and the ester group-containing acid-modified resin was not used.

Test Example 3

Example 8

A resin composition was produced in the same manner as in Example 1 with the exception that polybutylene adipate terephthalate (PBAT) was used instead of the polybutylene succinate adipate (PBSA).

Comparative Example 4

A resin composition was produced in the same manner as in Example 8 with the exception that the amount of the polybutylene adipate terephthalate (PBAT) was changed to 90 parts and the ester group-containing acid-modified resin was not used.

Test Example 4

Example 9

A resin composition was produced in the same manner as in Example 1 with the exception that 40 parts of polybutylene succinate adipate (PBSA) and 40 parts of polybutylene succinate (PBS) were used as the base resin.

Comparative Example 5

A resin composition was produced in the same manner as in Example 9 with the exception that the amount of the polybutylene succinate adipate (PBSA) was changed to 45 parts, the amount of the polybutylene succinate (PBS) was changed to 45 parts, and the ester group-containing acid-modified resin was not used.

Examples 1 to 9 and Comparative Examples 1 to 5 were evaluated as follows.

1. Preparation of Resin Composition

A single-screw extruder was used to form a single-layer film from a granulated product of the resin composition produced in each of the Examples.

The extruder that was used and the operating conditions thereof were as follows.

Single-Screw Extruder

Device: GTS-40-A (available from the Research Laboratory of Plastics Technology Co., Ltd.)
Screw rotational speed: 40 rpm
Temperature setting: C1/C2/C3/C4/H/AD/D = 150°C/160°C/170°C/170°C/170°C/170°C/170°C
Screen mesh: 90/90
Die: Coat hanger type (450 mm wide)
Film thickness: 50 μm

2. Measurement of Total Haze

As the measuring device, NDH4000 (available from Nippon Denshoku Industries Co., Ltd.) was used. Standard calibration was implemented in air (in a state in which the device was empty), and the total haze of each single-layer film produced above was measured.

In measuring the total haze, the single-layer film was cut into a 5 cm square, and the ends of the single-layer film were sandwiched and fixed between cardboard sheets, after which the film was set in the device, and the total haze was measured.

The total haze was measured three times for each sample, and the average value thereof was calculated.

3. Measurement of Internal Haze

As the measuring device, NDH4000 (available from Nippon Denshoku Industries Co., Ltd.) was used. Standard calibration was implemented using a cell containing only liquid paraffin, and the internal haze of each single-layer film produced above was measured.

In measuring the internal haze, the single-layer film was cut into a 5 cm square, and the ends of the single-layer film were sandwiched and fixed between cardboard sheets, after which the single-layer film was inserted into a cell containing liquid paraffin, the cell was set in the device, and the internal haze was measured.

The internal haze was measured three times for each sample, and the average value thereof was calculated.

4. Evaluation

In Test Example 1, Comparative Example 1 was used as a comparison target, and the single-layer film was evaluated based on the following criteria with respect to the values of the total haze and the internal haze of the comparison target. Test Examples 2 to 4 were evaluated using Comparative Example 3, Comparative Example 4, and Comparative Example 5, respectively, as comparison targets. Evaluation ratings of A and B are considered to be passing, and an evaluation rating of C is considered to be failing.

Evaluation Criteria

A: Both the total haze and the internal haze are lower than those of the comparison target.
B: One of the total haze and the internal haze is lower than that of the comparison target, and the other is the same as that of the comparison target.
C: Both the total haze and the internal haze are the same as those of the comparison target, or at least one of the total haze and the internal haze is higher than that of the comparison target.

The results are shown in Tables 3 to 6.

[Table 3]

Table 3

| | | | Example 1 | Example 2 | Example 3 | Example 4 | Example 5 | Example 6 | Comparative Example 1 | Comparative Example 2 |
|---|---|---|---|---|---|---|---|---|---|---|
| Mixing proportions (parts by mass) of resin composition | Base resin (A) | a-1 (PBSA) | 80 | 80 | 80 | 85 | 75 | 70 | 90 | - |
| | | a-4 (PLA) | - | - | - | - | - | - | - | 80 |
| | PVA resin (B) | b-1 | 10 | 10 | 10 | 10 | 10 | 10 | 10 | 10 |
| | Ester group-containing acid-modified resin (C) | c-1 | - | 10 | - | - | - | - | - | - |
| | | c-2 | - | - | 10 | - | - | - | - | - |
| | | c-3 | 10 | - | - | 5 | 15 | 20 | - | 10 |
| Acid value [mg·KOH/g] | Base resin (A) | | 1.3 | 1.3 | 1.3 | 1.3 | 1.3 | 1.3 | 1.3 | 0 |
| | PVA resin (B) | | 0.2 | 0.2 | 0.2 | 0.2 | 0.2 | 0.2 | 0.2 | 0.2 |
| | Ester group-containing acid-modified resin (C) | | 4.6 | 2.1 | 3.0 | 4.6 | 4.6 | 4.6 | - | 0.9 |
| | (A - B)/C | | 0.24 | 0.52 | 0.37 | 0.24 | 0.24 | 0.24 | - | -0.22 |
| Evaluation of single-layer film | | Total haze | 82 | 87 | 83 | 78 | 88 | 89 | 89 | 89 |
| | | Internal haze | 56 | 59 | 56 | 59 | 59 | 58 | 63 | 75 |
| | | Evaluation | A | A | A | A | A | B | - | C |

[Table 4]

Table 4

| | | | Example 7 | Comparative Example 3 |
|---|---|---|---|---|
| Mixing proportions (parts by mass) of resin composition | Base resin (A) | a-2 (PBS) | 80 | 90 |
| | PVA resin (B) | b-1 (PVA) | 10 | 10 |
| | Ester group-containing acid-modified resin (C) | c-3 | 10 | - |
| Acid value [mg· KOH/g] | Base resin (A) | | 1.1 | 1.1 |
| | PVA resin (B) | | 0.2 | 0.2 |
| | Ester group-containing acid-modified resin (C) | | 4.6 | - |
| | (A - B)/C | | 0.20 | - |
| Evaluation of single-layer film | | Total haze | 86 | 87 |
| | | Internal haze | 52 | 56 |
| | | Evaluation | A | - |

[Table 5]

Table 5

| | | | Example 8 | Comparative Example 4 |
|---|---|---|---|---|
| Mixing proportions (parts by mass) of resin composition | Base resin (A) | a-3 (PBAT) | 80 | 90 |
| | PVA resin (B) | b-1 (PVA) | 10 | 10 |
| | Ester group-containing acid-modified resin (C) | c-3 | 10 | - |
| Acid value [mg· KOH/g] | Base resin (A) | | 0.6 | 0.6 |
| | PVA resin (B) | | 0.2 | 0.2 |
| | Ester group-containing acid-modified resin (C) | | 4.6 | - |
| | (A - B)/C | | 0.09 | - |
| Evaluation of single-layer film | | Total haze | 19 | 80 |
| | | Internal haze | 5 | 19 |
| | | Evaluation | A | - |

[Table 6]

Table 6

<table>
<tr><td colspan="3"></td><td>Example 9</td><td>Comparative Example 5</td></tr>
<tr><td rowspan="4">Mixing proportions (parts by mass) of resin composition</td><td rowspan="2">Base resin (A)</td><td>a-1 (PBSA)</td><td>40</td><td>45</td></tr>
<tr><td>a-2 (PBS)</td><td>40</td><td>45</td></tr>
<tr><td>PVA resin (B)</td><td>b-1 (PVA)</td><td>10</td><td>10</td></tr>
<tr><td>Ester group-containing acid-modified resin (C)</td><td>c-3</td><td>10</td><td>-</td></tr>
<tr><td rowspan="4">Acid value [mg·KOH/g]</td><td colspan="2">Base resin (A)</td><td>1.2</td><td>1.2</td></tr>
<tr><td colspan="2">PVA resin (B)</td><td>0.2</td><td>0.2</td></tr>
<tr><td colspan="2">Ester group-containing acid-modified resin (C)</td><td>4.6</td><td>-</td></tr>
<tr><td colspan="2">(A - B)/C</td><td>0.22</td><td>-</td></tr>
<tr><td colspan="2" rowspan="3">Evaluation of single-layer film</td><td>Total haze</td><td>84</td><td>88</td></tr>
<tr><td>Internal haze</td><td>55</td><td>58</td></tr>
<tr><td>Evaluation</td><td>A</td><td>-</td></tr>
</table>

Test Example 1 is an example in which PBSA was used as the base resin. As is clear from Table 3, in Examples 1 to 5 in which a polyester resin containing at least one constituent unit derived from an aliphatic diol, a polyvinyl alcohol resin, and an ester group-containing acid-modified resin were contained, both the total haze and the internal haze were smaller than those of the comparison targets, and the transparency was improved. In Example 6, the internal haze was smaller than that of the comparison target, and the transparency was improved. In Comparative Example 2 in which PLA was used as the base resin, the internal haze was significantly worse. In Test Example 2 in which PBS was used as the base resin, in Test Example 3 in which PBAT was used as the base resin, and in Test Example 4 in which PBSA and PBS were contained in the same amount as base resins, the haze values of Examples 7 to 9 were smaller than those of the comparison targets for both the total haze and the internal haze.

The present invention has been described in detail with reference to specific embodiments. However, it would be clear to a person skilled in the art that various changes and modifications can be made without departing from the spirit and scope of the present invention. The present application is based on Japanese patent application (JP 2023-024441) filed on February 20, 2023, the content of which is incorporated herein by reference.

## Claims

1. A resin composition comprising:

   (A) a polyester resin containing at least one constituent unit derived from an aliphatic diol (provided that an ester group-containing acid-modified resin is not included);
   (B) a polyvinyl alcohol resin; and
   (C) an ester group-containing acid-modified resin.

2. The resin composition according to claim 1, wherein the resin composition comprises the component C in an amount of from 1 to 18 parts by mass per 100 parts by mass of a total of the component A, the component B, and the component C.

3. The resin composition according to claim 1 or 2, wherein acid values of the component A, the component B, and the component C satisfy a relationship of Formula (i) described below:

   (acid value of component A - acid value of component B)/acid value of component C $\leq$ 0.6 (i). (i).

4. The resin composition according to claim 1 or 2, wherein an acid value of the component A is 0.5 mg·KOH/g or more and less than 2.0 mg·KOH/g.

5. The resin composition according to claim 1 or 2, wherein an acid value of the component B is 0.4 mg·KOH/g or less.

6. The resin composition according to claim 1 or 2, wherein an acid value of component C is 2.0 mg·KOH/g or more.

7. The resin composition according to claim 1 or 2, wherein the resin composition comprises the component A in an amount of from 57 to 98 parts by mass per 100 parts by mass of a total of the component A, the component B, and the component C.

8. The resin composition according to claim 1 or 2, wherein the resin composition comprises the component B in an amount of from 1 to 25 parts by mass per 100 parts by mass of a total of the component A, the component B, and the component C.

9. The resin composition according to claim 1 or 2, wherein the component A is at least one biodegradable polyester selected from the group consisting of an aliphatic-aromatic copolyester resin, an aliphatic polyester resin, and an aromatic polyester resin.

10. The resin composition according to claim 1 or 2, wherein the component B contains a modified polyvinyl alcohol.

11. The resin composition according to claim 1 or 2, wherein the component C is an acid-modified product of at least one resin selected from the group consisting of an aliphatic-aromatic copolyester resin, an aliphatic polyester resin, and an aromatic polyester resin.

12. A molded product comprising the resin composition described in claim 1 or 2.

13. A container comprising the resin composition described in claim 1 or 2.

14. A film comprising the resin composition described in claim 1 or 2.

15. A sheet comprising the resin composition described in claim 1 or 2.

16. A multilayer structure comprising at least one layer containing the resin composition described in claim 1 or 2.

17. A method for producing a resin composition, the method comprising:
mixing (A) a polyester resin containing at least one constituent unit derived from an aliphatic diol (provided that an ester group-containing acid-modified resin is not included), (B) a polyvinyl alcohol resin, and (C) an ester group-containing acid-modified resin.

# INTERNATIONAL SEARCH REPORT

International application No.
**PCT/JP2024/005882**

## A. CLASSIFICATION OF SUBJECT MATTER

***C08L 67/00***(2006.01)i; ***B32B 27/30***(2006.01)i; ***C08J 3/20***(2006.01)i; ***C08L 29/04***(2006.01)i; ***C08L 101/06***(2006.01)i
FI: C08L67/00; C08L29/04 D; C08L101/06; C08J3/20 Z CEX; C08J3/20 CFD; B32B27/30 102

According to International Patent Classification (IPC) or to both national classification and IPC

## B. FIELDS SEARCHED

Minimum documentation searched (classification system followed by classification symbols)

C08L67/00; B32B27/30; C08J3/20; C08L29/04; C08L101/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | JP 2004-92769 A (NSK LTD.) 25 March 2004 (2004-03-25)<br>entire text | 1-17 |
| A | JP 2019-181943 A (MITSUBISHI CHEMICAL CORPORATION) 24 October 2019 (2019-10-24)<br>entire text | 1-17 |
| A | WO 2020/196722 A1 (KURARAY FASTENING CO., LTD.) 01 October 2020 (2020-10-01)<br>entire text | 1-17 |
| P, A | WO 2023/190413 A1 (MITSUBISHI CHEMICAL CORPORATION) 05 October 2023 (2023-10-05)<br>entire text | 1-17 |
| P, A | JP 2024-16422 A (SEKISUI PLASTICS CO., LTD.) 07 February 2024 (2024-02-07)<br>entire text | 1-17 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**
**Information on patent family members**

International application No.
**PCT/JP2024/005882**

| Patent document cited in search report | Publication date (day/month/year) | Patent family member(s) | Publication date (day/month/year) |
|---|---|---|---|
| JP 2004-92769 A | 25 March 2004 | (Family: none) | |
| JP 2019-181943 A | 24 October 2019 | US 2020/0384750 A1<br>WO 2019/189745 A1<br>EP 3778233 A1<br>CN 111867836 A | |
| WO 2020/196722 A1 | 01 October 2020 | US 2022/0175093 A1<br>EP 3949791 A1 | |
| WO 2023/190413 A1 | 05 October 2023 | (Family: none) | |
| JP 2024-16422 A | 07 February 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H05193077 A
- JP 2015143356 A
- JP 2023024441 A